Europäisches Patentamt

European Patent Office

Office européen des brevets

(11) Publication number: **0 130 797**
**B1**

## EUROPEAN PATENT SPECIFICATION

(45) Date of publication of patent specification: **19.04.89**

(51) Int. Cl.⁴: **G 01 N 21/89**

(21) Application number: **84304390.2**

(22) Date of filing: **28.06.84**

(54) Method of inspecting the surface of photographic paper.

(30) Priority: **04.07.83 JP 121175/83**
**04.07.83 JP 121176/83**
**06.07.83 JP 122534/83**

(43) Date of publication of application:
**09.01.85 Bulletin 85/02**

(45) Publication of the grant of the patent:
**19.04.89 Bulletin 89/16**

(84) Designated Contracting States:
**CH DE GB LI NL**

(56) References cited:
**EP-A-0 069 061**
**DE-A-2 441 822**

(73) Proprietor: **KONISHIROKU PHOTO INDUSTRY CO. LTD.**
**No. 26-2, Nishishinjuku 1-chome Shinjuku-ku Tokyo 160 (JP)**

(72) Inventor: **Takahashi, Tokuji**
**No. 2-16-30, Ohsakaue**
**Hino-Shi Tokyo (JP)**
Inventor: **Furuta, Kazumi**
**No. 3-2-2-205, Tsutsujigaoka**
**Akishima-Shi Tokyo (JP)**
Inventor: **Ishimoto, Kiyoshi**
**No. 2-5-19, Ohwada-Cho**
**Hachioji-Shi Tokyo (JP)**

(74) Representative: **Ben-Nathan, Laurence Albert et al**
**Urquhart-Dykes & Lord 91 Wimpole Street London W1M 8AH (GB)**

Courier Press, Leamington Spa, England.

## Description

This invention relates to a method of inspecting the surface of photographic paper, and more particularly to a surface inspecting method for photographic paper which is adapted to optically inspect defects occurred on the surface of photographic papers having various face properties.

Heretofore, there is known a method of detecting defects occurred on the surface of photographic paper, in which a laser beam as a light source scans using a flying spot technique, and the reflected light is sensed and converted into an electrical detection signal, so that any defect on the surface of photographic paper is detected in the form of a defect signal when there occurs any change in the reflected light.

DE-A-2441822 and EP-A-0,069,061 describe methods of inspecting web material by scanning the web material with a light beam and receiving reflected light at a light receiver to generate a corresponding electrical signal.

A problem with this technique has been, however, that since photographic paper has various types of face properties such as silk, mat, E-face, glossy, etc., the reflected light is disturbed through diffused reflection depending on the face property, whereby the S/N ratio of the detection signal is lowered and hence a satisfactory defect signal can not be obtained.

Meanwhile, color photographic paper is so fabricated that emulsions added with photosensitive pigments are simultaneously coated on base paper in the form of multiple layers by utilizing, e.g., a slide hopper technique. This type of multilayered emulsion layer is generally fabricated in such a manner for enhancing the special sensitivity that a red-sensitive panchromatic layer which is sensitive to a red light, a green-sensitive orthochromatic layer which is sensitive to a green light and a blue-sensitive regular layer which is sensitive to a blue light are laminated on base paper in this order, and a protective layer is then coated on the surface thereof.

At the time of coating the emulsions added with photosensitive pigments on base paper, however, if the base paper itself includes scratches on the surface, if fibrous matters are adhered on the base paper, or if air bubbles are present in the coated emulsions, this would cause defects on the surface of the color photographic paper.

In order to detect any defect occurred on the surface of color photographic paper, there has been conducted sampling for visual judgment rather than total inspection. But the former is a destructive inspection which requires much trouble and can not provide satisfactory detection. Alternatively, the total inspection can be also adopted by utilizing an infrared light to avoid sensitization of photographic paper, but this inspection is disadvantageous in that the detection capability is greatly decreased in such a wavelength region.

Further, as well known, although photographic paper is fabricated by coating an emulsion on a broad film base using, e.g., a slide hopper technique, the emulsion is not coated on the entire surface of the film base, namely, it is coated while leaving a predetermined width intact on both edges. If the film base itself of the photographic paper thus fabricated includes scratches on the surface, if fibrous matters are adhered thereon, or if air bubbles are present in the coated emulsion, there would be caused defects on the surface of the photographic paper. From this reason, such defects on the surface of photographic paper is so detected that a light beam from a light source is irradiated onto the photographic paper surface by a flying spot technique while conveying the photographic paper, and the reflected light is electrically converted to obtain a detection signal.

There is, however, a fear that a signal is occurred from the edge portions, where the emulsion is not coated, during such defect detection, and this signal may be erroneously regarded as a defect signal because the former can not be distinguished from the latter occurred from actual defects.

Heretofore, an edge detecting mechanism has been thus provided in contact with each edge of photographic paper, thereby to detect the edge of photographic paper under conveying. But this prior art results in the relatively complicated structure because of the presence of such an edge detecting mechanism separate from a surface inspecting mechanism, and has a problem also in point of detection accuracy.

An object of this invention is to provide a method of detecting defects in the surface of photographic paper in which the edges of the photographic paper can be detected while being clearly distinguished from a defective portion when inspecting the surface of the photographic paper, and which will minimize erroneous operation depending on the size of a defective portion of the coated part of the paper and the condition of uncoated edge portions thereof, thus resulting in high reliability.

The invention provides a method of detecting defects in the surface of photographic paper which comprises a main portion coated with emulsion and uncoated edge portions, said method comprising:

scanning said paper with a light beam from a light source using a flying spot scanner while said paper and the scanner move relative to one another,

detecting light reflected from the surface of said paper to produce a defect detection signal,

passing parts of said signal respectively through a band-pass filter and a high-pass filter and combining the outputs of said filters to provide edge position signals representing the scanning of said beam over the said edge portions, and

using said edge position signals to detect when defect signals originate from the coated portion of said paper.

Advantageously, the combined outputs of said filters may be averaged over a plurality of scans and compared for coincidence with the count, stored in a counter, representing the starting point in the flying spot scan, to provide said edge portion signals.

According to a feature of the invention, diffuse light reflected by a defective portion on the surface of the photographic paper may be sensed, the defect being detected in accordance with a change in the diffuse-reflected light.

It is advantageous to detect defective surface points in accordance with changes in diffuse-reflected light undergoing less disturbance on the basis that disturbance of the reflected light is caused by the regular reflected light, which can maintain larger the S/N ratio of a detection signal and hence provide a satisfactory defect signal, and which ensures positive detection of defects on the surface of photographic paper having various face properties.

It is also preferable to detect defects occurring on the surface of color photographic paper by sensing a change in color of an emulsion layer in a visible wavelength range where the sensitivity is relatively low, so that the defects can be sensed positively without causing fog at the time of detection. The surface of the color photographic paper is therefore preferably scanned using a light source emitting a visible light of wavelength from 550 nm to 635 nm, and color of the emulsion layer appearing on the surface of the color photographic paper is sensed for detecting the defects.

Other objects and features of this invention will be apparent from the following description with reference to the accompanying drawings, in which:

Fig. 1 is a view showing the structure of color photographic paper and specific sensitivities of respective emulsion layers;

Fig. 2 is a plot showing spectral sensitivity of the color photographic paper;

Fig. 3 is a schematic view for explaining the state where a defect on the color photographic paper is detected;

Fig. 4 is a circuit diagram for obtaining a detection signal for the defect on the color photographic paper;

Fig. 5 is a plot showing reflection factors of the respective emulsion layers;

Fig. 6 is a plot showing the intensity of the reflected light;

Fig. 7 is a view showing the relationship between the photographic paper and the output waveforms of an edge detection circuit at respective positions;

Fig. 8 is a block diagram showing the edge detection circuit; and

Fig. 9 is a block diagram showing an erroneous operation preventing circuit.

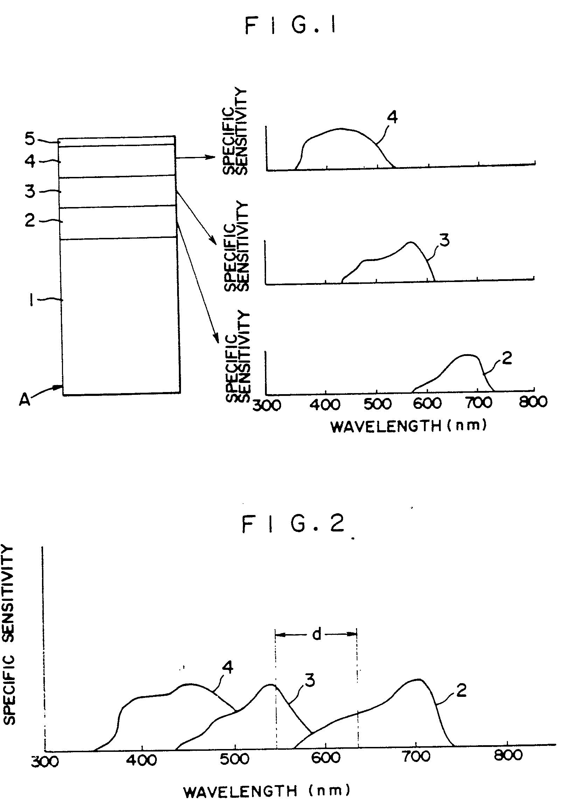

Fig. 1 is a view showing the structure of color photographic paper and spectral sensitivity profiles of respective emulsion layers, and Fig. 2 is a plot showing the spectral sensitivity profile of the color photographic paper. This type of color photographic paper A is manufactured in such a manner that emulsions added with photosensitive pigments are simultaneously coated in the form of multiple layers on base paper 1, which is fed at a predetermined speed, by utilizing, for example, a slide hopper technique. The multi-layered emulsion layer thus formed by simultaneously coating multiple emulsion layers on the base paper 1 comprises a red-sensitive panchromatic layer 2 which is sensitive to a red light, a green-sensitive orthochromatic layer 3 which is sensitive to a green light, a blue-sensitive regular layer 4 which is sensitive to a blue light, and a protective layer 5 coated on the regular layer 4, for the purpose of enhancing the respective spectral sensitivities.

More specifically, the panchromatic layer 2 is sensitive to a red light of wavelength in a range from 570 nm to 770 nm, the orthochromatic layer 3 is sensitive to a green light of wavelength in a range from 440 nm to 600 nm, and the regular layer 4 is sensitive to a blue light of wavelength in a range from 350 nm to 510 nm, so that each layer is sensitized only in its particular wavelength range. The color photographic paper A has various different types of face properties such as silk, mat, E-face, glossy, etc.

The color photographic paper A thus formed with the multilayered emulsion layer is then dried in the subsequent drying process. At the time of coating the emulsions added with photosensitive pigments on the base paper 1, however, if the base paper itself includes scratches on the surface thereof, if fibrous matters are adhered on the base paper 1, or if air bubbles are present in the coated solution, this would disturb coloring agents of different colors to be contained in the panchromatic layer 2, the orthochromatic layer 3 and the regular layer 4, respectively. As a result, the color on the surface of the color photographic paper is changed and the defect appears thereon.

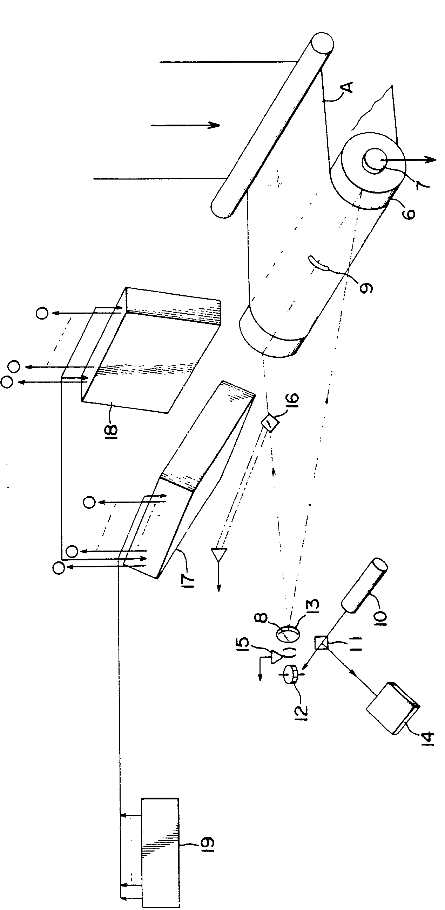

Such defect occurred on the surface of the color photographic paper is detected in a manner as shown in Fig. 3. The color photographic paper A is conveyed through a detection roll 6 at a predetermined speed. The detection roll 6 is provided with a rotary encoder 7 which generates conveying pulses. By counting these conveying pulses, a conveying speed of the color photographic paper A is sensed. In case of the low speed, a signal is sent to a shutter 8 to close it for preventing the occurrence of fog.

A He-Ne laser having wavelength of 632 nm is used as a light source 10 for detecting a defective portion 9 present on the surface of the color photographic paper A. The light source 10 of this invention includes a He-Ne laser and employs a visible light of wavelength from 550 nm to 635 nm. As shown in Fig. 2, the visible light in this range d locates in the region of relatively low spectral sensitivity. This can avoid the occurrence of fog when detecting the color of the emulsion layer appeared on the surface of the color photographic paper A while scanning the surface of the color photographic paper A in the manufacturing process. The light emitted from the light source 10 is attenuated through an ND filter 11, polarized by a rotary scanner 12 and then scans the surface of the color photographic paper A through an FΘ lens 13. At this time, the reflected light from the ND filter 11 is received by a power monitor 14 to detect abnormality of the ND filter 11. In the event of occurrence of any abnormality, the shutter 8 is closed to prevent the occurrence of fog. Further, the light reflected by the rotary scanner 12 is sensed by a scanner rotation detector 15 to detect a rotational speed of the rotary scanner 12. In the event that the rotational speed is lowered, the shutter 8 is also closed. A mirror 16 is disposed between the rotary scanner 12 and the detection roller 6 to detect the origin of each scanning light, so that the scanning lights from the rotary scanner 12 may be compensated for relative fluctuations among individual scannings.

A photo receiving section comprises a part 17 for receiving the diffuse-reflected light and a part 18 for receiving the regular-reflected light. These photo receiving parts are operated by a high-voltage power source 19, and each part houses therein a plurality of photomultipliers for converting a light to electric signals and a plurality of preamplifiers disposed in the stage next thereto for amplification of electric signals.

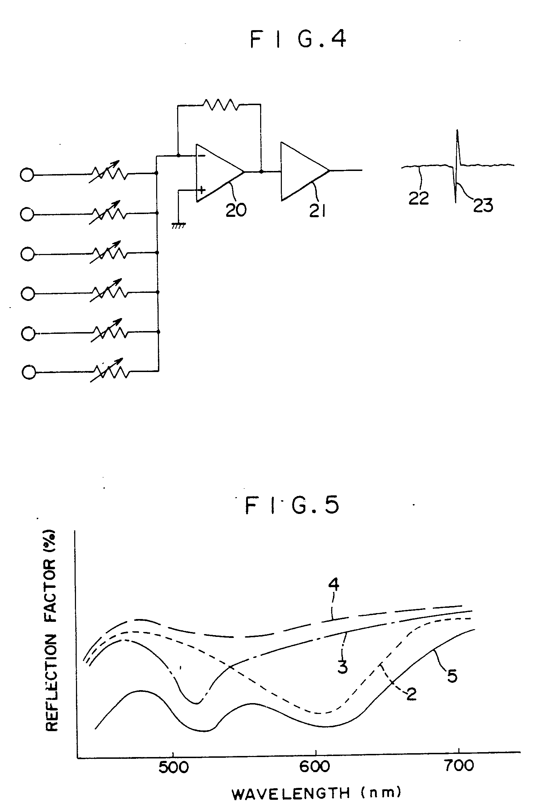

As shown in Fig. 4, outputs from the plurality of preamplifiers are summed by an additive amplifier 20 and then passed through a high-pass filter 21 for extracting the signal only corresponding to the defective portion, whereby a detection signal 22 is taken therefrom. If the defective portion 9 is present on the surface of the color photographic paper A, the coloring agents of different colors contained in the panchromatic layer 2, the orthochromatic layer 3 and the regular layer 4 corresponding to the defective portion 9 would be disturbed and the color of the surface would be changed accordingly. The light hits upon the defective portion 9, and the diffuse-reflected light among the light reflected by the defective portion 9 is received by the diffuse-reflected light receiving part 17 for detection of the defect. The diffuse-reflected light is less disturbed depending on the type of the color photographic paper A, e.g., the different surface properties of the color photographic paper A such as silk, mat, E-face, glossy, etc., whereby the S/N ratio of the detection signal 22 can be maintained larger and hence the accuracy of a defective signal 23 is improved.

In case of glossy paper, since the regular reflected light is also less disturbed, the defect may be detected by receiving the light by the regular-reflected light receiving part 18.

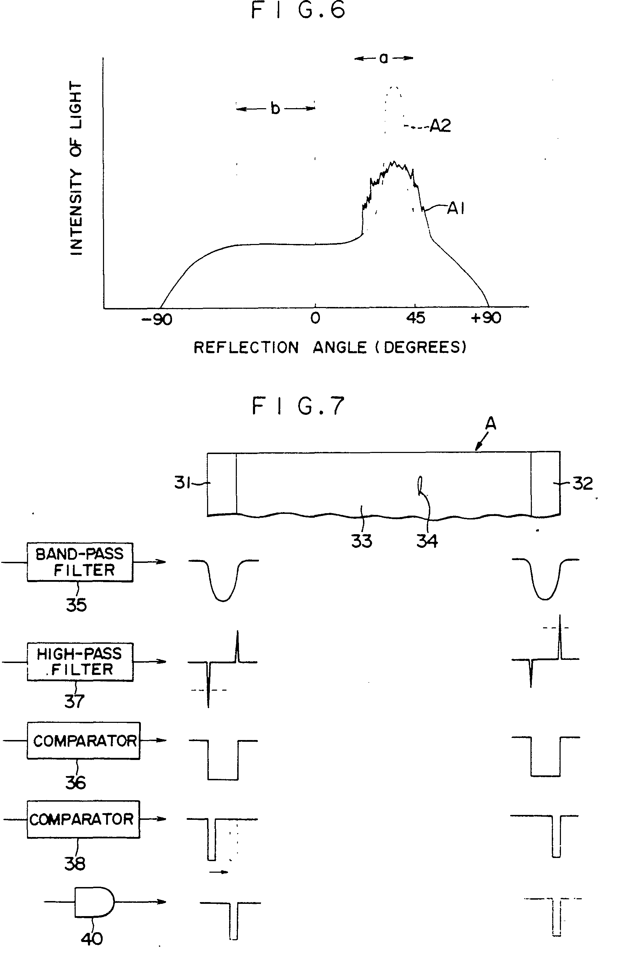

The foregoing detection of the defect is performed by sensing a change in color appeared in the defective portion 9 using the diffuse light. The panchromatic layer 2, the orthochromatic layer 3 and the regular layer 4 in the defective portion 9 have their reflection factors as shown in Fig. 5, respectively.

As will be seen from the relationship between reflection angle and intensity of the reflected light shown in Fig. 6, the color photographic paper with surface properties of silk A1 and glossy A2 have large changes in the intensity of light in the region a of the regular-reflected light, while both have less changes in the intensity of light in the region b of the diffuse-reflected light. Further, in the region a of the regular-reflected light the paper of silk A1 has also a disturbance in the intensity of light, and this tendency can be seen similarly in photographic paper with other surface properties such as mat, E-face, etc.

Therefore, since the intensity of light is less disturbed depending on the difference in face properties of photographic paper by receiving the light in the region b of the diffuse-reflected light, the S/N ratio of the detection signal 21 can be maintained larger and hence the accuracy of the defect signal 22 can be improved.

Incidentally, photographic paper to be used is not limited to color photographic paper, and this invention can be applied similarly to black-and-white photographic paper.

As described above, since the diffuse-reflected light from a defective portion on the surface of photographic paper is sensed for detecting a defect on the photographic paper surface, it becomes possible to make less an influence of changes in the intensity of light caused by surface properties which are different depending on the type of photographic paper, and to maintain larger the S/N ratio of a detection signal. This results in the improved accuracy of a defect signal and ensures detection of any defect occurred on the surface of various photographic paper.

Further, according to this invention, since the surface of color photographic paper is scanned using a light source emitting a visible light of wavelength from 550 nm to 635 nm as noted above, it becomes possible to detect any defect occurred on the surface of photographic paper by utilizing a visible light providing the relatively low sensitivity and hence to prevent the occurrence of fog at the time of detection. Also, since the defect is detected by sensing the color of the emulsion layer appeared on the surface of color photographic paper, the degree of defect can be detected simply and surely.

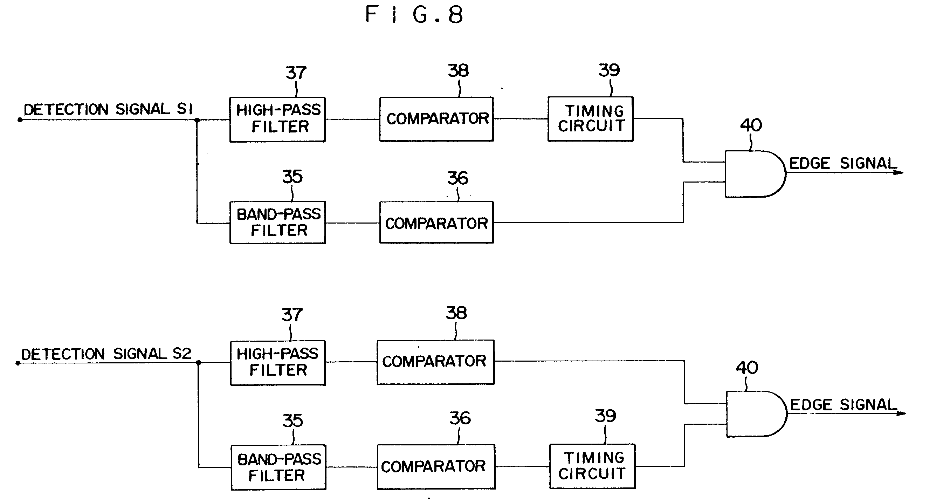

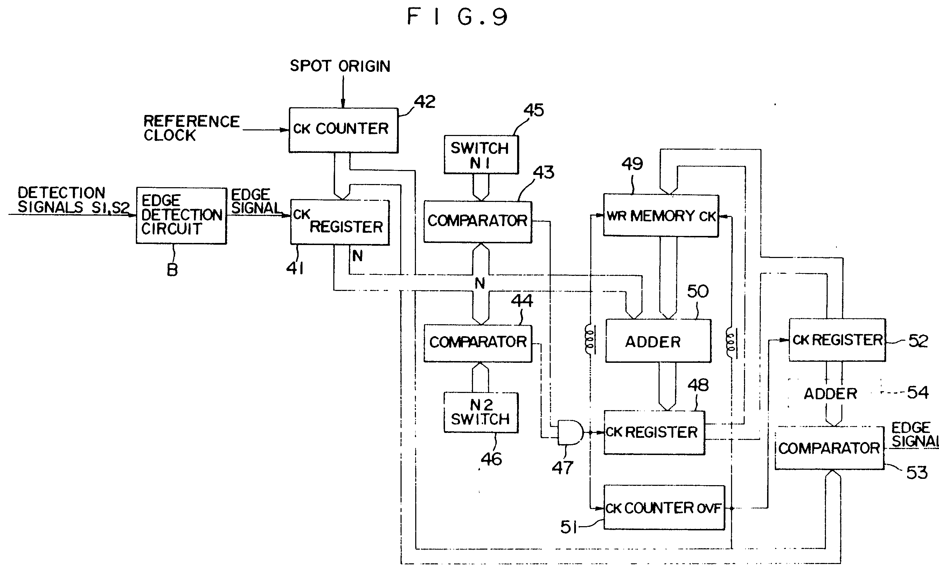

Fig. 7 is a view showing the relationship between photographic paper and output waveforms of an edge detection circuit at respective position, Fig. 8 is a block diagram showing the edge detection circuit, and Fig. 9 is a block diagram showing an erroneous operation preventing circuit.

Photographic paper A is so fabricated, for example, that emulsions are simultaneously coated in the form of multiple layers on a film base, which is conveyed at a predetermined speed, by utilizing a slide hopper technique. This coating is made while leaving both side edges of the broad film base intact, and these uncoated parts 31, 32 on both side edges will be cut off in the final process.

The photographic paper A thus formed is then dried in the subsequent process. At the time of coating the emulsions on the film base, however, if the film base itself includes scratches on the surface thereof, if fibrous matters are adhered on the film base, or if air bubbles are present in the coated solution, defects would be occurred in a coated part 33. Thus, detection of such defects is carried out in a manner that a light beam from a light source irradiates on photographic paper in the widthwise direction using a flying spot technique while conveying the paper, and the reflected light from the surface of the photographic paper is electrically converted to obtain a detection signal, thereby issuing a defect signal when a defective portion 34 is present.

In this connection, defects on the surface of photographic paper is detected by scanning the entire surface including not only the coated part 33 of the emulsion, but also uncoated parts 31, 32 thereof. The detection signal obtained such scanning includes an edge signal in addition to the aforesaid defect signal as its signal components. The edge signal is issued from the fact that those uncoated parts 31, 32 are coated with no emulsion, and there is a fear that the edge signal may be erroneously regarded as a defect signal.

From the standpoint of frequency component, the edge signal is further divided into a signal representing the uncoated parts 31, 32 and a signal representing the boundary between the edges and the coated part 33, both signals having relatively high frequency.

The frequency component of the detection signal, which is obtained by scanning the entire surface of the photographic paper A, corresponding to the uncoated part 31 at one edge thereof passes through a band-pass filter 35, output of which issues pulses through a comparator 36. On the other hand, the high frequency component sharply changed at the boundary between the edge and the coated part 33 passes through a high-pass filter 37, output of which issues a signal corresponding to the edge through a comparator 38. This issued signal is superimposed on the pulses from the comparator 36 in a timing circuit 39, and only the signals having passed through both the filters are taken through an AND circuit 40.

Meanwhile, the frequency component corresponding to the uncoated part 32 is issued in a similar manner to the above. Namely, the frequency component passes through a high-pass filter 37, output of which is fed to a comparator 38, and then output of the comparator 38 is superimposed on output of a comparator 36 in a timing circuit 39.

In this way, since the edge of photographic paper is detected using the edge signals having passed through the band-pass filter 35 and the high-pass filter 37, the edge can be recognized based on the edge signals clearly distinguished from the defect signal corresponding to the defective portion 34 and the edge position can be measured accurately.

Furthermore, it may be sometimes happened that if a relatively wide defect is present at the time of edge detection, this defect is erroneously recognized as an uncoated part of emulsion, or that if the uncoated part is very narrow, it becomes impossible to discriminate the defective portion from the uncoated part. From this reason, the edge signals are applied to an erroneous operation preventing circuit.

One embodiment of this erroneous operation preventing circuit is shown in Fig. 9.

The entire surface of photographic paper is scanned by a flying spot and the detection signal obtained for each scanning is applied to the edge detection circuit B, which in turn generates the edge signal. The edge signal is applied to a register 41. This clock-input causes an output value of a counter 42 representing a position of the flying spot to be latched in the register 41, so that the input position of the edge signal is taken into the register 41. An output value of the register 41 is applied to comparators 43, 44. In these comparators 43, 44, the numbers N1, N2 previously specified by switches 45, 46 are compared with the value N issued from the register 41, respectively.

These specified numbers N1, N2 meet the relationship of N1>N2 and represent a proper range which ensures that a level of the edge signal locates within a certain region depending on possibility of changes in a width of photographic paper, the zigzag movement of photographic paper under conveying, etc.

Only in case the output value from the register 41 satisfies the condition of N1>N>N2, a register 48 receives a clock through an AND circuit 47, whereby the value from the register 41 is added to the value previously stored in a memory 49 in an adder 50 and this added value is taken into the register 48. Then, this value is stored again in the memory 49 from the register 48.

Subsequently, the next edge signal is applied to the register 41 and, when the output value N from the register 41 locates between N1 and N2, the value N is added to the value previously stored in the memory 49 in the adder 50. This added value is stored in the memory 49 in a similar manner to the above.

The number of the foregoing repeated cycles is counted by a counter 51. Input for the counter 51 is applied thereto when the output value N from the register 41 locates between N1 and N2. At the time when the counter 51 is counted up and overflowed at certain times of integer, this overflowed signal is applied to a register 52. Only on this occasion, upper digits of output from the register 48 are stored alone into the register 52. In this way, the value from the register 52 represents an average value of those which are obtained for a plurality of scannings under the condition that the output value N of the register 41 locates between N1 and N2.

Then, the content of the register 52 is compared with the content of the counter 42 representing the spot position in a comparator 53. The desired edge signals can be obtained when both the content equal to each other.

It is to be noted that the erroneous operation preventing circuit is connected the edge detection circuits for the edge of the uncoated part 31 and the edge of the uncoated part 32. In the erroneous operation preventing circuit for the uncoated part 31, because the edge signal from the edge detection circuit is generated in a shifted relation to the edge position, an adder 54 is disposed between the register 52 and the comparator 53 so that the contents of both registers are compared in the comparator 53 in accordance with the edge position.

As described in above, the frequency component of the defect detection signal, which is obtained by electrically converting the reflected light from the surface of photographic paper, corresponding to the uncoated part at the edge thereof is passed through a band-pass filter, the high frequency component changed at the edge is passed through a high pass filter, and the edge of photographic paper is detected based on the detection signals having passed through both the filters, whereby the edge can be detected simply while being clearly distinguished from the defective portion.

Further, even if it is difficult to discriminate the defect signal from the edge signal in case the photographic paper includes a relatively broad defect on the surface thereof, or even if the edge signal is not generated because the edge part is also coated with the emulsion, the edge signal is issued at a predetermined position and judgement is made based on an average value resulted from a plurality of scannings, as a result of which it becomes possible to prevent erroneous detection of the edge.

## Claims

1. A method of detecting defects in the surface of photograohic paper which comprises a main portion coated with emulsion and uncoated edge portions, said method comprising:

scanning said paper with a light beam from a light source (10) using a flying spot scanner while said paper and the scanner move relative to one another,

detecting light reflected from the surface of said paper to produce a defect detection signal,

passing parts of said signal respectively through a band-pass filter and a high-pass filter and combining the outputs of said filters to provide edge position signals representing the scanning of said beam over the said edge portions, and

using said edge position signals to detect when defect signals originate from the coated portion of said paper.

2. A method as claimed in Claim 1 wherein the combined outputs of said filters are averaged over a plurality of scans and compared for coincidence with the count, stored in a counter (42), representing the starting point in the flying spot scan, to provide said edge position signals.

3. A method as claimed in Claim 1 or Claim 2 wherein diffused light reflected from said paper is sensed.

4. A method as claimed in any one of Claims 1-3, wherein the photographic paper (A) is one for color photography.

5. A method as claimed in Claim 4, wherein the photographic paper (A) is multi-layered and photosensitive.

6. A method as claimed in any of Claims 1-5, wherein said photographic paper (A) is moving.

7. A method as claimed in any one of Claims 1-6, wherein said light beam has a wavelength of 550 to 635 nm.

8. A method as claimed in any one of Claims 1-7, wherein said light beam is one emitted from a He-Ne laser (10).

## Patentansprüche

1. Verfahren zum Feststellen von Fehlern in der Oberfläche von photographischem Papier, das einen mit Emulsion beschichteten Hauptteil sowie unbeschichtete Randbereiche aufweist, wobei das Verfahren umfaßt:

Abtasten des Papiers mit einem Lichtstrahl von einer Lichtquelle (10) unter Verwendung eines Lichtpunktabtasters, während sich Papier und Abtaster relativ zueinander bewegen,

Erfassen des von der Oberfläche des Papiers reflektierten Lichts zwecks Erzeugung eines Fehlerfeststellungssignals,

Hindurchleiten von Teilen dieses Signals jeweils durch ein Bandpaßfilter und ein Hochpaßfilter sowie Vereinigen der Ausgangssignale dieser Filter zwecks Lieferung von Randpositions- oder -lagensignalen, welche die Abtastbewegung des Strahls über die Randbereiche repräsentieren, und

Verwenden dieser Randlagensignale zur Erfassung, wann Fehlersignale vom beschichteten Teil des Papiers ausgehen.

2. Verfahren nach Anspruch 1, dadurch gekennzeichnet, daß die vereinigten Ausgangssignale der Filter über eine Vielzahl von Abtastungen gemittelt und auf Koinzidenz mit dem in einem Zähler (42) gespeicherten, den Ausgangspunkt in der Lichtpunktabtastung repräsentierenden Zählstand verglichen werden, um die Randlagensignale zu liefern.

3. Verfahren nach Anspruch 1 oder 2, dadurch gekennzeichnet, daß vom Papier reflektiertes gestreutes Licht gemessen wird.

4. Verfahren nach einem der Ansprüche 1 bis 3, dadurch gekennzeichnet, daß das photographische Papier (A) ein solches für Farbphotographie ist.

5. Verfahren nach Anspruch 4, dadurch gekennzeichnet, daß das photographische Papier (A) mehrlagig und lichtempfindlich ist.

6. Verfahren nach einem der Ansprüche 1 bis 5, dadurch gekennzeichnet, daß sich das photographische Papier (A) bewegt.

7. Verfahren nach einem der Ansprüche 1 bis 6, dadurch gekennzeichnet, daß der Lichtstrahl eine Wellenlänge von 550-635 nm aufweist.

8. Verfahren nach einem der Ansprüche 1 bis 7, dadurch gekennzeichnet, daß der Lichtstrahl ein von einem He-Ne-Laser (10) emittierter Lichtstrahl ist.

## Revendications

1. Procédé pour détecter les défauts dans la surface du papier photographique qui comprend une région principale revêtue d'émulsion et des régions marginales non revêtues, lequel procédé comprend:

le balayage du papier avec un faisceau lumineux provenant d'une source de lumière (10) au moyen d'un dispositif de balayage à spot volant tandis que le papier et le dispositif de balayage se déplacent l'un par rapport à l'autre,

la détection de la lumière réfléchie par la surface du papier pour produire un signal de détection de défaut,

le passage de parties du signal respectivement par un filtre passe-bande et un filtre passe-haut et la combinaison des signaux de sortie des filtres pour former des signaux de position de marge représentant le balayage des régions marginales par le faisceau, et

l'utilisation des signaux de position de marge pour détecter si des signaux de défaut proviennent de la région revêtue du papier.

2. Procédé suivant la revendication 1, dans lequel une moyenne des signaux de sortie combinés des filtres est établie sur plusieurs balayages et est comparée pour en vérifier la coïncidence au compte stocké dans un compteur (42), représentant le point de départ du balayage par le spot volant, pour former les signaux de position de marge.

3. Procédé suivant la revendication 1 ou 2, dans lequel la lumière diffusée réfléchie par le papier est détectée.

4. Procédé suivant l'une quelconque des revendications 1 à 3, dans lequel le papier photographique (A) est un papier pour la photographie en couleurs.

5. Procédé suivant la revendication 4, dans lequel le papier photographique (A) porte plusieurs couches et est photosensible.

6. Procédé suivant l'une quelconque des revendications 1 à 5, dans lequel le papier photographique (A) se déplace.

7. Procédé suivant l'une quelconque des revendications 1 à 6, dans lequel le faisceau lumineux a une longueur d'onde de 550 à 635 nm.

8. Procédé suivant l'une quelconque des revendications 1 à 7, dans lequel le faisceau lumineux est émis par un laser He-Ne (10).

F I G . I

F I G . 2

# F I G. 4

# F I G. 5

REFLECTION FACTOR (%)

WAVELENGTH (nm)

# FIG.6

# FIG.7

# F I G . 8

DETECTION SIGNAL S1

37
HIGH-PASS FILTER

38
COMPARATOR

39
TIMING CIRCUIT

35
BAND-PASS FILTER

36
COMPARATOR

40
EDGE SIGNAL

DETECTION SIGNAL S2

37
HIGH-PASS FILTER

38
COMPARATOR

35
BAND-PASS FILTER

36
COMPARATOR

39
TIMING CIRCUIT

40
EDGE SIGNAL

# F I G. 9

SPOT ORIGIN

REFERENCE CLOCK → CK COUNTER — 42

SWITCH N1 — 45

49

DETECTION SIGNALS S1,S2 → EDGE DETECTION CIRCUIT — EDGE SIGNAL → CK REGISTER — 41

COMPARATOR — 43

WR MEMORY CK

B

N

N

COMPARATOR — 44

ADDER — 50

CK REGISTER — 52

N2 SWITCH — 46

47

CK REGISTER — 48

ADDER — 54

COMPARATOR — 53 — EDGE SIGNAL

CK COUNTER OVF — 51

EP 0 130 797 B1